# EUROPEAN PATENT APPLICATION

(11) **EP 3 882 849 A1**
(43) Date of publication of application: **22.09.2021**
(21) Application number: 20163443.3
(22) Date of filing: 16.03.2020
(51) Int. Cl.: G06T 7/00, G06T 7/194

(54) **METHOD FOR DETERMINING CHARACTERISTICS OF A SAMPLE VESSEL IN AN IN-VITRO DIAGNOSTICS SYSTEM, ANALYZING DEVICE, AND IN-VITRO DIAGNOSTICS SYSTEM**

(71) Applicant: F. Hoffmann-La Roche AG, 4070 Basel (CH); Roche Diagnostics GmbH, 68305 Mannheim (DE)
(72) Inventor: SAROFIM, Emad, 6343 Rotkreuz (CH)
(74) Representative: Bittner, Thomas L.

(57) **Abstract**

A method is disclosed for determining characteristics of a sample vessel (1) in an in-vitro diagnostics system. The method comprises the steps of, providing first image data representing a first image of a sample vessel (1) in a first scene, wherein in the first scene, a first illumination condition comprising a background illumination of the sample vessel (1) is applied to the sample vessel (1); providing second image data representing a second image of the sample vessel (1) in a second scene, wherein in the second scene, a second illumination condition different from the first illumination condition is applied to the sample vessel (1); determining a mask from the first image, the mask indicating a sub-image section of the first image comprising a representation of the sample vessel (1) in the first image; determining sub-image data from the second image containing a representation of the sample vessel (1) in the second image by applying the mask to the second image; and determining characteristics of the sample vessel (1) from an image data analysis, comprising image data analysis of the sub-image data. Furthermore, an analyzing device (7) having one or more processors configured for carrying out the method, as well as an in-vitro diagnostics system and an in-vitro preanalytical system comprising the analyzing device (7) are provided.

## Description

The present disclosure refers to a method for determining characteristics of a sample vessel in an in-vitro diagnostics system, an analyzing device, and an in-vitro diagnostics system.

### Background

In-vitro diagnostics systems are applied to test samples such as blood or tissue samples that have been taken from the human body. In-vitro diagnostics can detect diseases or other conditions, and can be used to monitor a person's overall health to help cure, treat, or prevent diseases. In-vitro diagnostics also may be applied in precision medicine to identify patients who are likely to benefit from specific treatments or therapies. Some in-vitro diagnostics tests are used in laboratory or other health professional settings.

Sample vessels or containers, such as blood collection tubes, but also other containers, such as for urine, swab, tissue, bone-marrow, capillary blood et cetera, are nowadays often processed and handled by automation solutions (in-vitro diagnostics system). Such automation solutions, to run reliably, require Sample Container Analysis Means (SCAM) to provide at least one of the following: recognize the presence of a sample container; recognize the status, such as open vs. closed, upward vs. upside down, labelled vs. unlabelled, spinned vs. unspinned of a sample vessel; report position and / or pose of a container; report position and / or pose of parts related to the container e.g. of a label or cover or orientation mark; recognize type of sample container (TTI); and recognize irregularities of / on the sample container. It is an object clear localization of the sample container or vessel in an image taken, thereby, allowing a clear propagation of contours of sample container, e.g. in order to derive the exact geometries, status etc.

Current Sample Container Analysis Means (SCAM) struggle frequently with running reliably. This situation might create unexpected stoppages and the need for manual intervention steps to compensate the shortcomings of these systems.

Document US 2019 / 0033209 A1 discloses a model-based method for quantifying a specimen. The method includes providing a specimen, capturing images of the specimen while illuminated by multiple spectra at different nominal wavelengths, and exposures, and classifying the specimen into various class types comprising one or more of serum or plasma portion, settled blood portion, gel separator (if used), air, tube, label, or cap; and quantifying of the specimen. Quantifying includes determining one or more of: a location of a liquid-air interface, a location of a serum-blood interface, a location of a serum-gel interface, a location of a blood-gel interface, a volume and / or a depth of the serum or plasma portion, or a volume and/or a depth of the settled blood portion. Quality check modules and specimen testing apparatus adapted to carry out the method are described, as are other aspects. Also, document US 2018 / 0365530 A1 refers to model-based method of determining characteristics of a specimen container.

Document US 2018 / 0364268 A1 discloses a model-based method of classifying a specimen in a specimen container.

Document WO 2019 / 018314 A1 discloses an apparatus for characterizing a specimen and / or a specimen container. The characterization apparatus includes an imaging location configured to receive a specimen container containing a specimen, a light source configured to provide lighting of the imaging location, and a hyperspectral image capture device. The hyperspectral image capture device is configured to generate and capture a spectrally-resolved image of a small portion of the specimen container and specimen at a spectral image capture device. The spectrally-resolved image data received at the spectral image capture device is processed by a computer to determine at least one of: segmentation of at least one of the specimen and/or specimen container, and determination of a presence or absence of an interferent, such as hemolysis, icterus, or lipemia. Methods of imaging a specimen and / or specimen container, and specimen testing apparatus including a characterization apparatus are described, as are other aspects.

Document WO 2018 / 089935 A1 refers to a characterization apparatus including pattern generation. The characterization apparatus is configured to characterize a specimen and / or a specimen container in some embodiments.

### Summary

It is an object of the present disclosure to provide a method for determining characteristics of a sample vessel, an analysing device, and an in an in-vitro diagnostics system which support secure and efficient handling of sample vessels in the in-vitro diagnostics system.

For solving the problem, a method for determining characteristics of a sample vessel in an in-vitro diagnostics system according to claim 1 is provided. Further, an analyzing device and an in-vitro diagnostics system according to claim 11 and claim 12, respectively, are provided. Also, an in-vitro preanalytical system according to claim 13 is provided. Further embodiments are disclosed in dependent claims.

According to one aspect, a method for determining characteristics of a sample vessel in an in-vitro diagnostics system is provided, the method comprising, in an analysing device of the in-vitro diagnostics system having one or more processors: providing first image data representing a first image of a sample vessel in a first scene, wherein in the first scene, a first illumination condition comprising a background illumination of the sample vessel is applied to the sample vessel; providing second image data representing a second image of the sample vessel in a second scene, wherein in the second scene, a second illumination condition different from the first illumination condition is applied to the sample vessel; determining a mask or a masked image from the first image, the mask indicating a sub-image section of the first image comprising a representation of the sample vessel in the first image; determining sub-image data / an image data subset from the second image containing a representation of the sample vessel in the second image by applying the mask to the second image; and determining characteristics of the sample vessel from an image data analysis, comprising image data analysis of the sub-image data.

According to another aspect, an analyzing device for determining characteristics of a sample vessel is provided, the analyzing device comprising one or more processors, the one or more processors configured to provide first image data representing a first image of a sample vessel in a first scene, wherein in the first scene, a first illumination condition comprising a back-ground illumination of the sample vessel is applied to the sample vessel; provide second image data representing a second image of the sample vessel in a second scene, wherein in the second scene, a second illumination condition different from the first illumination condition is applied to the sample vessel; determine a mask from the first image, the mask indicating a sub-image section of the first image comprising a representation of the sample vessel in the first image; determine sub-image data from the second image containing a representation of the sample vessel in the second image by applying the mask to the second image; and determine characteristics of the sample vessel from an image data analysis, comprising image data analysis of the sub-image data.

According to still a another aspect, an in-vitro diagnostics system is provided, the system comprising an analyzing device having one or more processors, the analyzing device configured to provide first image data representing a first image of a sample vessel in a first scene, wherein in the first scene first illumination condition comprising a background illumination of the sample vessel is applied to the sample vessel; provide second image data representing a second image of the sample vessel in a second scene, wherein in the second scene, a second illumination condition different from the first illumination condition is applied to the sample vessel; determine a mask from the first image, the mask indicating a sub-image section of the first image comprising a representation of the sample vessel in the first image; determine sub-image data from the second image containing a representation of the sample vessel in the second image by applying the mask to the second image; and determine characteristics of the sample vessel from an image data analysis, comprising image data analysis of the sub-image data.

According to still a another aspect, an in-vitro preanalytical system, comprising an analyzing device having one or more processors is provided, the analyzing device being configured to provide first image data representing a first image of a sample vessel in a first scene, wherein in the first scene, a first illumination condition comprising a back-ground illumination of the sample vessel is applied to the sample vessel; provide second image data representing a second image of the sample vessel in a second scene, wherein in the second scene, a second illumination condition different from the first illumination condition is applied to the sample vessel; determine a mask from the first image, the mask indicating a sub-image section of the first image comprising a representation of the sample vessel in the first image; determine sub-image data from the second image containing a representation of the sample vessel in the second image by applying the mask to the second image; and determine characteristics of the sample vessel from an image data analysis, comprising image data analysis of the sub-image data.

The technique proposed provides for at least one more reliable identification of the sample vessel and properties and pose there off in the digital images of the sample vessel taken for the different scenes. Based on the first image the mask of the sample vessel is determined from the first image. The mask of the vessel is indicating the outline of the sample vessel which in some embodiments may also referred be to as contour of the sample vessel. Following, sample characteristics can be determined with improved accuracy. Determining the characteristics with higher reliability will support a more safe operation of the in-vitro diagnostics system.

In an alternative embodiment, characteristics for more than one sample vessel (plurality of sample vessels) may be determined. Characteristics common to all sample vessels may be determined. Alternatively, different characteristics for different sample vessels may be determined.

The method may further comprise generating third image data representing a third image of the sample vessel, the third image data comprising the sub-image data. The third image will be showing at least the image data from the image area defined by applying the mask (outline or contour of the sample vessel). In some embodiment it may allow for processing image data of the third image independently in a digital image analysis for determining the characteristics.

The second image data may be provided with a second illumination condition selected from the following group: without the background illumination; a non-background illumination different from the background illumination only, such as at least one of a top illumination or a front illumination; and a combination of the background illumination and the non-background illumination. One or more of the illumination conditions from the group may be applied.

The method may further comprise applying diffuse illumination under at least one of the background illumination and the non-background illumination.

Background image data may be provided, representing a background image of a background scene missing the sample vessel, wherein in the background scene, the first illumination condition is applied. The background scene may correspond the first scene applying the first illumination condition, but with the missing or lacking the sample vessel.

The mask may in particular indicate which part of the first image relates to the sample vessel and which part of the first image does not relate to the sample vessel.

Determining the mask may comprise processing the first image data and the background image data.

The processing of the first image data and the background image data may comprise comparing brightness of an image area in the first image to a corresponding image area in the background image.

The determining of the mask may comprise determining a transmission value for each point / pixel in the first image. The determining may comprise comparing the first image to the back-ground image. For example, the first image and the background image may be compared by comparing the images pixel by pixel. It may be provided that if the transmission value (of an image pixel) is smaller than a threshold value, for example about 90 %, about 95 %, or about 98 %, the image pixel, in the mask, is assigned to an image area related to the sample vessel, and otherwise, the pixel is assigned to an image area not related to the sample vessel (background). By determining transmission values, transparent bodies or sections of sample vessels may also be detected.

Reference image data may be provided which represent a reference image of a background scene missing the sample vessel, wherein the second illumination condition is applied. A reference object may be provided in a location in which the sample vessel is located in the first and / or the second scene. The reference object may be a flat material object, preferably with a defined reflectance. Alternatively, a surface of the background illumination (device) may be applied as the reference object.

It may be provided that, by means of the reference image, a corrected interim image is generated which replaces the second image. The generating may comprise correcting the second image for inhomogeneous spatial illumination and / or correcting the second image spectrally.

The determining of the characteristics may comprise determining, for the sample vessel or a sub part of the sample vessel, at least one of: geometric characteristics; colour characteristics; type of vessel; pose of the sample vessel; presence or non-presence of sample in the sample vessel; status of sample in the sample vessel; status of sampling of sample in the sample vessel; and information provided on the sample vessel.

The embodiments disclosed with respect to the method for determining characteristics of the sample vessel above may apply to at least one of the analyzing device, the in-vitro diagnostics system, and the in-vitro preanalytical system *mutatis mutandis.*

### Description of further embodiments

Following, embodiments, by way of example, are described with reference to figures. In the figures show:
- Fig. 1: a schematic representation of an arrangement for detecting images of a sample vessel provided in different scenes applying different illumination conditions for the sample vessel;
- Fig. 2: a schematic representation of another arrangement for detecting images of a sample vessel provided in different scenes applying different illumination conditions for the sample vessel;
- Fig. 3: a schematic representation of different images provided in a method for determining characteristics of a sample vessel in an in-vitro diagnostics system;
- Fig. 4: a further schematic representation of different images provided in a method for determining characteristics of a sample vessel in an in-vitro diagnostics system, wherein images for a plurality of sample vessels are taken; and
- Fig. 5: a schematic representation of different images provided in a method for determining characteristics of a sample vessel in an in-vitro diagnostics system using flat field and / or white balance correction.

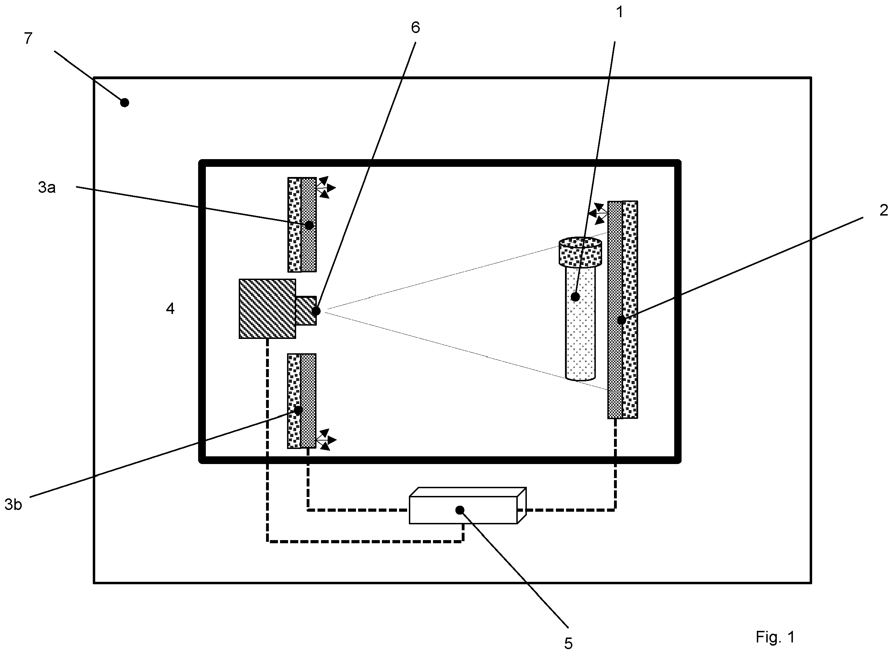

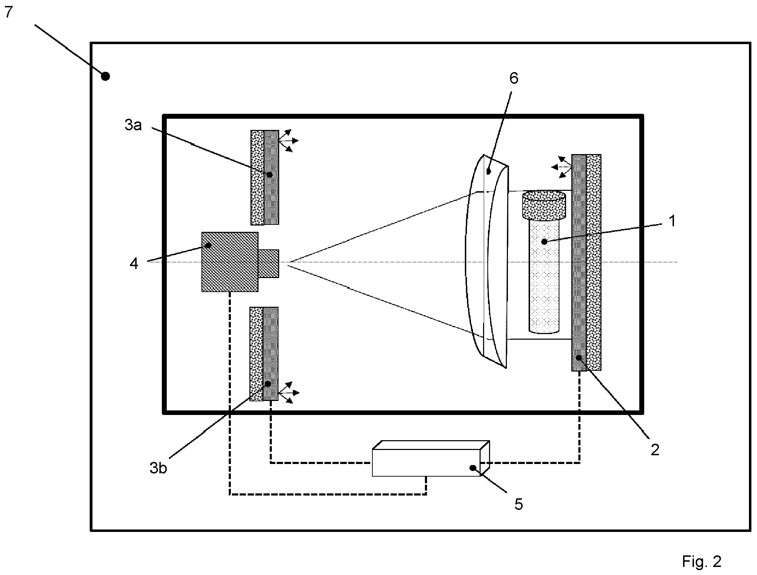

Fig. 1 and 2 show a schematic representation of an arrangement for detecting and processing (digital) images of a sample vessel 1 provided in different scenes applying different illumination condition to the sample vessel 1. The sample vessel 1 may receive a (test) sample such as a blood or tissue sample that has been taken from human body. Diseases or other conditions may be detected by analyzing the test sample received in the sample vessel 1 in an in-vitro diagnostics system.

The arrangements depicted in Fig. 1 and 2 may be used in an analyzing device provided in the in-vitro diagnostics system for detecting a plurality of images of the sample vessel 1 in different scenes distinguished at least by different illumination condition applied to the sample vessel 1.

The images detected by the arrangements in Fig. 1 and 2, following detection, may be analyzed by image data analysis or processing for determining characteristics (i.e. characteristics of the sample vessel) for the sample vessel 1. Information about the characteristics can be processed or used in the in-vitro diagnostics system for operation of the system. Thus, reliable determination of the characteristics will support safe operation of the sample vessel 1 and a sample received in the sample vessel 1 in the in-vitro diagnostics system. For example, in response to determining specific characteristics, the sample vessel 1 may be provided to some special procedure of sample analysis in the in-vitro diagnostics system, the special procedure assigned to the characteristic(s) of the sample vessel 1 determined.

For the arrangements depicted in Fig. 1 and 2 there is a background illumination device 2 for providing background illumination for the sample vessel 1. The background illumination device 2 mainly directs light to the back-side of the sample vessel 1, or parts of the sample vessel 1 being analyzed. Further, illumination devices 3a, 3b are provided, for example, for applying diffuse illumination. The background illumination device 2 may also be provided with a light source for diffuse background illumination. In an alternative embodiment, at least one of the background illumination device 2 and the illumination devices 3a, 3b may be configured to provide non-diffuse illumination for the sample vessel 1. The illumination devices 3a, 3b may be applied for front and / or top illumination of the sample vessel 1, thereby, providing the option for applying different illumination condition to the sample vessel 1 in different scenes.

Additionally, in the embodiments shown, the background illumination device 2 extends over the whole size of the sample vessel 1. For example, the background illumination device 2 may be provided with self-shining illumination panels, e.g. LED (LED - light emitting diode), or OLED (LED - organic light emitting diode) based illumination panels or not self-shining surfaces, being indirectly illuminated. Similar configuration may be provided for the illumination devices 3a, 3b. The wavelength of the illumination is selected according to the application. Simple presence detection may use a narrow bandwidth light, such as from a colored LED. A color-determination of the cap may need white light.

A detecting device 4 is provided for detection or acquisition of (digital) images of the sample vessel 1 while the sample vessel 1 is illuminated by the background illumination device 2 and / or the illumination devices 3a, 3b. Also, images may be detected by the detection device 4 in case there is no illumination by the light sources of the background illumination device 2 and the illumination devices 3a, 3b for the sample vessel 1. A camera provided with the detection device 4 can be "grey-scale" camera, an RGB camera or may be a camera with specific sensitivity, depending on the purpose or application. The detection device 4 may also have time of flight capabilities or may be a stereo-camera, in order to also retrieve 3 D-data or distance information. The back or background illumination device 2, with respect to the detecting device 4, is placed at a distance farther than the sample vessel or container 1.

The background illumination device 2, the illumination devices 3a, 3b, and the detection device 4 which may be provided with a digital camera are connected to a control device 5 which is configured to control operation of the different devices while the images of the sample vessel 1 are detected for the different scene. The control device 5 controls the detection device 4 and the illumination of the scene by at least one of the background illumination device 2 and the illumination devices 3a, 3b in the process of image acquisition. This may include any of triggering of components, supplying power, synchronizing and parametrizing. The control device 5 may also be configured to process the images according to the different embodiments disclosed here.

For the different arrangements in Fig. 1 and 2 there is an optical element 6 of different type, such as a field lens (see Fig. 1) and a cylinder lens (see Fig. 2) for providing optimized optical conditions depending on the scene to be detected.

An analyzing device 7 which may be implemented together with the control device 5 and which comprises one or more processors for processing (digital) image data is connected to the detection device 4. A plurality images detected by the detection device 4 will be processed in the analyzing device 7 for determining characteristics of the sample vessel 1. The analyzing device 7 may be connectable to a hosting or server device (not shown) for data communication and synchronization.

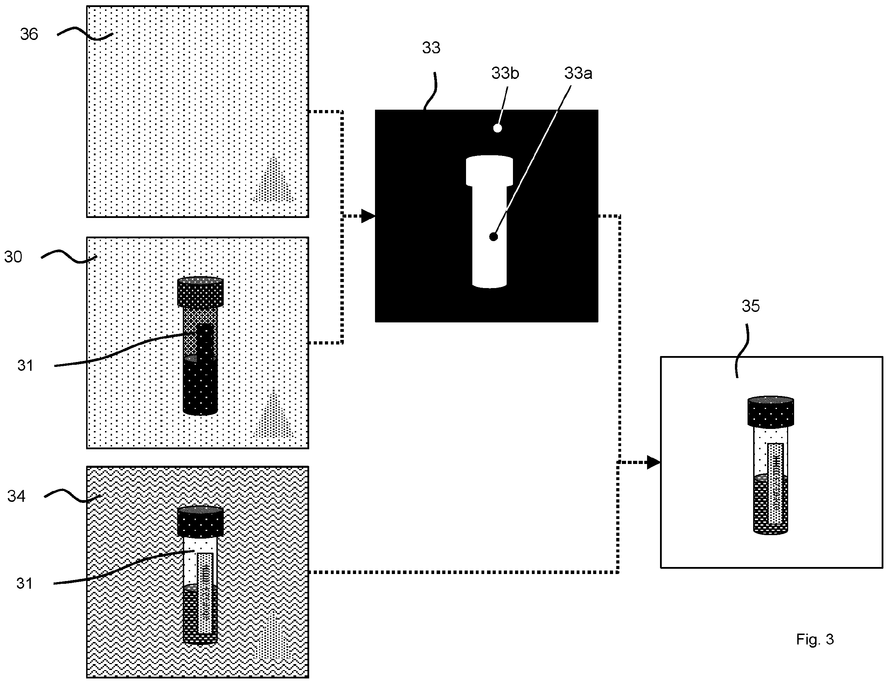

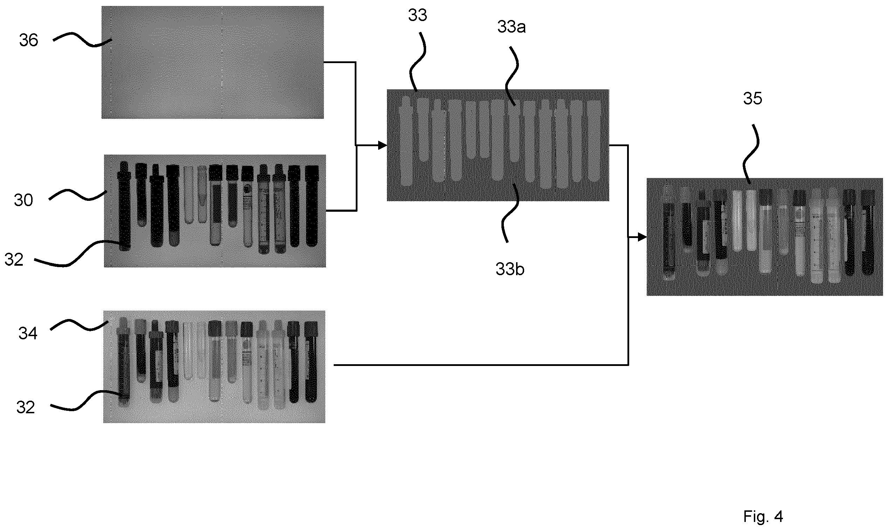

Fig. 3 and Fig. 4 each show a schematic representation of a plurality of (digital) images provided in a method for determining characteristics for one or more sample vessels from the images detected, for example, by one of the arrangements shows in Fig. 1 and 2. The plurality of images detected by the detection device 4 is processed by the analyzing device 7 as it is described for an embodiment in the following. According to the embodiment in Fig. 3, in a first image 30 there is a (single) sample vessel 31 shown representing a single sample vessel such as the sample vessel 1 depicted in Fig. 1 and 2.

Fig. 4 shows a further schematic representation of different images provided in a method for determining characteristics of a sample vessel in an in-vitro diagnostics system, wherein images for a plurality of sample vessels 32 are provided. According to Fig. 4, in an alternative embodiment, there is the plurality of sample vessels 32 shown in the first image 30, the plurality of sample vessels 32 is representing a plurality of sample vessels each to receive a sample such as a plurality of the sample vessel 1. Fig. 4 also illustrates how even transparent sections of the sample vessels 32 are well displayed by applying front illumination.

The first image 30 represents an image of the sample vessel 31 in a first scene applying background illumination for the sample vessel 31. Similarly, the first image 30 in Fig. 4 represents an image of the plurality of sample vessels 32 in a first scene applying background illumination provided by the background illumination device 2.

A mask 33 for the sample vessel 31 / the plurality of sample vessels 32 is provided, the mask 33 representing an outline or contour for the sample vessel 31 or the plurality of sample vessels 32. The mask 33 is generated by image data analysis or processing of the first image 30. The mask 33 comprises an area 33a related to the sample vessel(s) 31, 32 and an area 33b not related to the sample vessel(s) 31, 32 but to the background.

Still referring to Fig. 3 and 4, there is a second image 34 showing the sample vessel 31 / the plurality of sample vessels 32 in a second scene for which a second illumination condition is applied which is different from the first illumination condition applied for detecting the first image 30. In the embodiment shown in Fig. 4, the second illumination condition applies background illumination provided by the background illumination device 2 and (in addition to the first scene) top and / or front illumination provided by the illumination devices 3a, 3b.

The mask 33 is applied to the second image 34 for processing a masked image 35 which comprises image data from image data subsets in the second image 34, wherein the image data subsets are defined by the mask 33. The outcome of the process described is that the (tube) images of the sample vessel 31 / the plurality of sample vessels 32 depicted by the image data subsets are clearly separated from the background, are in full color, and have no reflections and no shadows. Therefore, the masked image 35 specifically enables an easy and reliable image analysis, such as for vessel-pose- and vessel-type-recognition.

Subsequently, the masked image 35 can be processed for determining characteristics for one or all of the sample vessels 31, 32. For example, the characteristics to be determined by image data analysis may comprise one or more of the following characteristics: Presence or absence of a sample vessel; position of sample container(s); pose of sample vessel; a gripping point of a sample vessel; size of sample container; status of sample container, e.g. filled or unfilled; property of part of container, e.g. color of cap, length of tube, level; and sample container type. Such data or image analysis of the masked image 35 is known as such.

The process or method outlined above provides for a more reliable determination of the characteristics from the masked image 35 which is derived from image data processing based on the first image 30, the second image 34, and the mask 33.

According to the embodiment shown in Figs. 3 and 4, a background image 36 is detected by the detection device 4 for a background scene. For the background scene the first illumination condition is applied, wherein the background illumination is provided by background illumination device 2. In the background scene any sample vessel is missing or lacking.

The background image 36 together with the first image 30 is processed for determining the mask 33. The determining of the mask 33 may comprise determining a transmission value for each point, pixel or section in the first image 30. The first image 30 is compared to the back-ground image 36. For example, the first image 30 and the background image 36 may be compared by comparing the images pixel by pixel. It may be provided that if the transmission value (of an image pixel) is smaller than a threshold value, for example about 90 %, about 95 %, or about 98 %, the corresponding image pixel, in the mask 33, is assigned to an image area related to the sample vessel 31, 32, and otherwise, the pixel is assigned to an image area not related to the sample vessel 31, 32 (background). By determining transmission values, transparent bodies may also be detected.

At least one of the first image 30, the mask 33, the second image 34, the background image 36, and the reference image 50, for example, may be stored in a memory of the control device 5 or a memory accessible by the control device 5.

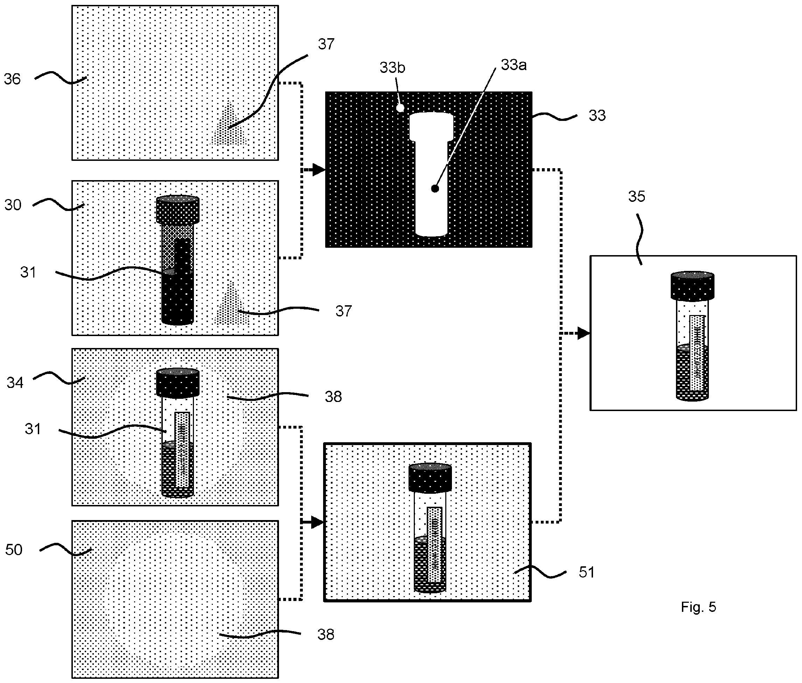

Fig. 5 shows a schematic representation of different images provided in a method for determining characteristics of a sample vessel in an in-vitro diagnostics system using flat field and / or white balance correction.

In the background image 36 a triangle symbol 37 is depicted which is to schematically represent some a real or virtual object in the background illumination scene, for example, a lighting inhomogeneity. Since the real or virtual object (symbolically represented by the triangle 37) is present in both in the background image 36 and in the first image 30 showing the sample vessel 31, it does not have a negative impact on the mask 33.

In the second image 34 a circle symbol 38 is shown which is to schematically represent, for example, an illumination inhomogeneity, specifically in a front lighting situation applying the illumination devices 3a, 3b. Such illumination inhomogeneity, for example, may refer to edge areas being less bright. It can be caused by the illumination devices 3a, 3b and / or imaging optics applied.

A reference image 50 which may also be referred to second background image is provided for compensating for the inhomogeneity schematically represented by the circle symbol 38. The reference image 50 and the second image 34 are processed for determining a corrected interim image 51 corrected with respect to the inhomogeneity schematically represented by the circle symbol 38. Following, the masked image 35 is determined by processing the mask 33 and the corrected interim image 51.

With respect to the inhomogeneity represented by the circle symbol 38, a white plate may used as a reference which may "beautifully" reflect differences in exposure. Since the (illumination) inhomogeneity is invariant over time (as long as the setup does not change), it may be sufficient to capture and store the reference image 50 once. The brightness distribution of the reference image 50 without the sample vessel 31 then serves as compensation or correction. If, for example, an image subarea is only half as bright as another image subarea different from the image subarea, intensity (pixel) values of the image subarea are scaled up accordingly. If, in addition, a neutral white image subarea does not show a nominal R:G:B ratio, e.g. 1:1:1, these R:G:B ratios can be normalized (which technically corresponds to a white balance). The latter serves to correct color errors caused by the illumination or the color reproduction of the detection device 4 such as a digital camera.

### List of reference signs

- 1: sample vessel
- 2: background illumination device
- 3a, 3b: illumination devices
- 4: detecting device
- 5: control device
- 6: optical element
- 7: analyzing device
- 30: first image
- 31: sample vessel (depicted in image)
- 32: plurality of sample vessels (depicted in image)
- 33: mask
- 33a: area related to sample vessel
- 33b: area not related to sample vessel
- 34: second image
- 35: masked image
- 36: background image
- 37: triangle symbol
- 38: circle symbol
- 50: reference image
- 51: corrected interim image

## Claims

1. A method for determining characteristics of a sample vessel (1; 31; 32) in an in-vitro diagnostics system, comprising, in an analyzing device (7) of the in-vitro diagnostics system having one or more processors,
- providing first image data representing a first image (30) of a sample vessel (1; 31; 32) in a first scene, wherein in the first scene, a first illumination condition comprising a background illumination of the sample vessel (1; 31; 32) is applied to the sample vessel (1; 31; 32);
- providing second image data representing a second image (34) of the sample vessel (1; 31; 32) in a second scene, wherein in the second scene, a second illumination condition different from the first illumination condition is applied to the sample vessel (1; 31; 32);
- determining a mask (33) from the first image (30), the mask (33) indicating a sub-image section of the first image (30) comprising a representation of the sample vessel (1; 31; 32) in the first image (30);
- determining sub-image data from the second image (34) containing a representation of the sample vessel (1; 31; 32) in the second image (34) by applying the mask (33) to the second image (34); and
- determining characteristics of the sample vessel (1; 31; 32) from an image data analysis, comprising image data analysis of the sub-image data.

2. The method according to claim 1, further comprising generating third image data representing a third image of the sample vessel (1; 31; 32), the third image data comprising the sub-image data.

3. The method according to at least one of the preceding claims, further comprising providing the second image data with a second illumination condition for the sample vessel (1; 31; 32) selected from the following group:
- without the background illumination,
- a non-background illumination different from the background illumination only, such as at least one of a top illumination and a front illumination, and
- a combination of the background illumination and the non-background illumination.

4. The method according to at least one of the preceding claims, further comprising applying diffuse illumination for at least one of the background illumination and the non-background illumination.

5. The method according to at least one of the preceding claims, further comprising providing background image data representing a background image (36) of a back-ground scene missing the sample vessel (1; 31; 32), wherein in the background scene, the first illumination condition is applied.

6. The method according to claim 5, wherein determining the mask (33) comprises processing the first image data and the background image data.

7. The method according to claim 6, where the processing of the first image data and the background image data comprises comparing brightness of an image area in the first image (30) to a corresponding image area in the background image (36).

8. The method according to at least one of the preceding claims, further comprising providing reference image data representing a reference image (50) of a background scene missing the sample vessel (1; 31; 32), wherein the second illumination condition is applied.

9. The method according to at least one of the preceding claims, wherein by means of the reference image (50), a corrected interim image (51) is generated which the second image (34), the generating comprising at least one of
- correcting the second image (34) for inhomogeneous spatial illumination and
- correcting the second image (34) spectrally.

10. The method according to at least one of the preceding claims, wherein determining the characteristics comprises determining, for the sample vessel (1; 31; 32) or a sub-part of the sample vessel (1; 31; 32), at least one of: geometric characteristics; colour characteristics; type of vessel; pose of the sample vessel (1; 31; 32); presence or non-presence of sample in the sample vessel (1; 31; 32); status of sample in the sample vessel (1; 31; 32); status of sampling of sample in the sample vessel (1; 31; 32); and information provided on the sample vessel (1; 31; 32).

11. An analyzing device (7) for determining characteristics of a sample vessel (1; 31; 32), comprising one or more processors, the one or more processors configured to
- provide first image data representing a first image (30) of a sample vessel (1; 31; 32) in a first scene, wherein in the first scene, a first illumination condition comprising a background illumination of the sample vessel (1; 31; 32) is applied to the sample vessel (1; 31; 32);
- provide second image data representing a second image (34) of the sample vessel (1; 31; 32) in a second scene, wherein in the second scene, a second illumination condition different from the first illumination condition is applied to the sample vessel (1; 31; 32);
- determine a mask (33) from the first image (30), the mask (33) indicating a sub-image section of the first image (30) comprising a representation of the sample vessel (1; 31; 32) in the first image (30);
- determine sub-image data from the second image (34) containing a representation of the sample vessel (1; 31; 32) in the second image (34) by applying the mask (33) to the second image (34); and
- determine characteristics of the sample vessel (1; 31; 32) from an image data analysis, comprising image data analysis of the sub-image data.

12. An in-vitro diagnostics system, comprising an analyzing device (7) having one or more processors, the analyzing device configured to
- provide first image data representing a first image (30) of a sample vessel (1; 31; 32) in a first scene, wherein in the first scene, a first illumination condition comprising a background illumination of the sample vessel (1; 31; 32) is applied to the sample vessel (1; 31; 32);
- provide second image data representing a second image (34) of the sample vessel (1; 31; 32) in a second scene, wherein in the second scene, a second illumination condition different from the first illumination condition is applied to the sample vessel (1; 31; 32);
- determine a mask (33) from the first image (30), the mask (33) indicating a sub-image section of the first image (30) comprising a representation of the sample vessel (1; 31; 32) in the first image (30);
- determine sub-image data from the second image (35) containing a representation of the sample vessel (1; 31; 32) in the second image (35) by applying the mask (33) to the second image (34); and
- determine characteristics of the sample vessel (1; 31; 32) from an image data analysis, comprising image data analysis of the sub-image data.

13. An in-vitro preanalytical system, comprising an analyzing device (7) having one or more processors, the analyzing device configured to
- provide first image data representing a first image (30) of a sample vessel (1; 31; 32) in a first scene, wherein in the first scene, a first illumination condition comprising a background illumination of the sample vessel (1; 31; 32) is applied to the sample vessel (1; 31; 32);
- provide second image data representing a second image (34) of the sample vessel (1; 31; 32) in a second scene, wherein in the second scene, a second illumination condition different from the first illumination condition is applied to the sample vessel (1; 31; 32);
- determine a mask (33) from the first image (30), the mask (33) indicating a sub-image section of the first image (30) comprising a representation of the sample vessel (1; 31; 32) in the first image (30);
- determine sub-image data from the second image (34) containing a representation of the sample vessel (1; 31; 32) in the second image (34) by applying the mask (33) to the second image (34); and
- determine characteristics of the sample vessel (1; 31; 32) from an image data analysis, comprising image data analysis of the sub-image data.
